# EUROPÄISCHE PATENTSCHRIFT

(11) **EP 3 463 998 B1**
(45) Veröffentlichungstag und Bekanntmachung des Hinweises auf die Patenterteilung: **23.02.2022**
(21) Anmeldenummer: 17710192.0
(22) Anmeldetag: 08.03.2017
(51) Int. Cl.: B60T 8/40

(54) **PEDALKRAFTSIMULATOREINRICHTUNG**
PEDAL FORCE SIMULATOR DEVICE
DISPOSITIF DE SIMULATION DE FORCE DE PÉDALE

(30) Priorität: 24.05.2016 DE 102016208942
(43) Veröffentlichungstag der Anmeldung: 10.04.2019
(73) Patentinhaber: Robert Bosch GmbH, 70442 Stuttgart (DE)
(72) Erfinder: HANSMANN, Simon, Plymouth 48170 (US); KISTNER, Matthias, 74626 Bretzfeld (DE); SPROCQ, Raynald, 77450 Esbly (FR); VOGG, Juergen, 87439 Kempten (DE); ANDERSON, Chris, 75002 Paris (FR)
(86) Internationale Anmeldenummer: PCT/EP2017/055453
(87) Internationale Veröffentlichungsnummer: WO 2017/202512

(56) Entgegenhaltungen:
- WO-A1-2004/080772
- DE-A1-102014 211 481

## Beschreibung

Die Erfindung betrifft eine Pedalkraftsimulatoreinrichtung, mit einem Gehäuse, in welchem ein betätigbarer Druckkolben axial verschiebbar gelagert ist, und mit zumindest zwei Schraubenfedern, die parallel zueinander zwischen einer Stirnseite des Druckkolbens und einem Axialanschlag des Gehäuses angeordnet sind.

Ferner betrifft die Erfindung ein Fahrzeug, insbesondere Kraftfahrzeug, mit solch einer Pedalkraftsimulatoreinrichtung.

### Stand der Technik

Pedalkraftsimulatoreinrichtungen der eingangs genannten Art sind aus dem Stand der Technik bekannt. Diese werden üblicherweise bei Fahrzeugen mit elektronischen Bremssystemen, sogenannten Brake-by-Wire Bremssystemen, verwendet. Dabei simuliert beziehungsweise erzeugt die Pedalkraftsimulatoreinrichtung bei einer Betätigung eines Bremspedals durch einen Fahrer des Fahrzeugs eine Rückstellkraft auf das Bremspedal. Die erzeugte Rückstellkraft simuliert dabei ein Bremspedalkraftgefühl, dass dem Fahrer durch ein Fahren eines Fahrzeugs mit konventionellem, hydraulischem Bremssystem bekannt ist.

Die aus der WO 2004/080772 A1 bekannte Pedalkraftsimulatoreinrichtung kommt der nachfolgend erläuterten Erfindung am Nächsten. Sie ist ausgestattet mit einem Gehäuse, in welchem ein betätigbarer Druckkolben axial verschiebbar gelagert ist. Mehrere Schraubenfedern sind zwischen einer Stirnseite des Druckkolbens und einem Axialanschlag des Gehäuses angeordnet. Zwischen den Schraubenfedern und dem Axialanschlag sind mehrere Tellerfedern zwischengeschaltet.

US 6,347,518 B1 zeigt eine Pedalkraftsimulatoreinrichtung mit drei parallel zueinander angeordneten Schraubenfedern, die zwischen einer Stirnseite eines axial verschiebbaren Druckkolbens und einem Axialanschlag eines Gehäuses der Pedalkraftsimulatoreinrichtung angeordnet sind. Bei einer Betätigung des Bremspedals wird der Druckkolben derart verlagert, dass er eine erste Schraubenfeder komprimiert beziehungsweise zusammendrückt, wobei nach einer weiteren Auslenkung des Druckkolbens die erste Schraubenfeder und eine zweite Schraubenfeder gemeinsam komprimiert werden und nach einer weiteren Auslenkung des Druckkolbens die erste Schraubenfeder, die zweite Schraubenfeder und eine dritte Schraubenfeder gemeinsam komprimiert werden. In Abhängigkeit der zeitgleich komprimierten Schraubenfedern wird eine resultierende Rückstellkraft erzeugt, die einer weiteren Betätigung des Bremspedals entgegenwirkt und damit das Bremspedalkraftgefühl simuliert.

US 7,357,465 B2 offenbart eine weitere Pedalkraftsimulatoreinrichtung.

### Offenbarung der Erfindung

Wie oben dargelegt ist zwischen den Schraubenfedern und dem Axialanschlag und/oder zwischen den Schraubenfedern und dem Druckkolben jeweils zumindest eine Tellerfeder zwischengeschaltet. Eine Tellerfeder ist einfach herstellbar, beansprucht wenig Bauraum und ist mit einer hohen Druckkraft beaufschlagbar. Im Allgemeinen ist die Tellerfeder in Form eines Kegelstumpfes mit geringer axialer Ausdehnung ausgebildet, so dass sie in einem Gehäuse der Pedalkraftsimulatoreinrichtung platzsparend anordenbar ist. Zudem weist sie üblicherweise eine hohe mechanische Vorspannung auf, so dass bei einer Beaufschlagung mit einer hohen Druckkraft die Tellerfeder nur geringfügig ausgelenkt wird und gleichzeitig eine hohe Rückstellkraft erzeugt. Eine Federanordnung bestehend aus zumindest einer Schraubenfeder und zumindest einer Tellerfeder bietet somit die Möglichkeit, dass beispielsweise dann, wenn die Schraubenfeder bereits vollständig durch den Druckkolben zusammengedrückt ist und ein Maximum an Rückstellkraft erzeugt, eine zusätzliche Rückstellkraft durch die Tellerfeder erzeugt wird. Dies verbessert das Bremspedalkraftgefühl, insbesondere bei Bremsvorgängen, bei welchen ein Bremspedal eines zu bremsenden Fahrzeugs mit großer Kraft durch einen Fahrer betätigt wird.

Erfindungsgemäß sind die Schraubenfedern entgegengesetzt gewunden. Hierdurch wird gewährleistet, dass bei einer Betätigung der Schraubenfedern ein Verwickeln dieser Schraubenfedern vermieden wird. Dies erhöht insbesondere deren Lebensdauer und gewährleistet einen ordnungsgemäßen Betrieb der Pedalkraftsimulatoreinrichtung.

Gemäß einer bevorzugten Weiterbildung der Erfindung ist vorgesehen, dass auf der zumindest einen Tellerfeder zumindest eine weitere Tellerfeder aufliegt, so dass die Tellerfedern eine gestapelte Tellerfederanordnung bilden, wobei die Tellerfeder und die zumindest eine weitere Tellerfeder parallel und/oder spiegelbildlich zueinander ausgerichtet sind. Der Vorteil hierbei ist, dass mittels einer Kombination zumindest zweier übereinander liegender Tellerfedern eine resultierende Federhärte der Tellerfedern einstellbar ist. Eine Tellerfeder ist demnach umso härter, je weniger sie sich in Abhängigkeit einer auf sie wirkenden Kraft, insbesondere Druckkraft, elastisch verformen lässt. Liegen zwei Tellerfedern parallel aufeinander, so sind sie gleichsinnig übereinander geschichtet angeordnet. Dabei liegt die obere Tellerfeder mit ihrer Mantelfläche bevorzugt auf der Mantelfläche der darunter liegenden Tellerfeder an. Zwei derart parallel zueinander angeordnete Tellerfedern weisen beispielsweise eine größere Federhärte auf als eine einzelne Tellerfeder. Ist eine Tellerfeder spiegelbildlich zu der anderen Tellerfeder angeordnet, so sind die Tellerfedern wechselsinnig übereinander geschichtet angeordnet. Zwei derart spiegelbildlich zueinander angeordnete Tellerfedern weisen insgesamt eine geringere Federhärte auf als eine einzelne Tellerfeder. Werden eine einzelne Tellerfeder und zwei spiegelbildlich zueinander angeordneten Tellerfedern mit der gleichen Druckkraft beaufschlagt, so werden die spiegelbildlich angeordneten Tellerfedern weiter ausgelenkt als die einzelne Tellerfeder. Durch die Anordnung der Tellerfedern ist es somit möglich, unterschiedliche Federhärten beziehungsweise Federkennlinien unterschiedlicher Steigung vorzugeben. Um mechanische Reibung zu minimieren, weisen parallel gestapelte und parallel ausgerichtete Tellerfedern auf ihren Mantelflächen bevorzugt Schmierstoffe, beispielswese Schmieröle, auf.

Besonders bevorzugt ist vorgesehen, dass die jeweilige Tellerfeder Metall, eine metallische Legierung und/oder Kunststoff aufweist. Damit wird vorteilhaft gewährleistet, dass die Tellerfeder aus einem mechanisch belastbaren und elastisch verformbaren Material gefertigt ist, das eine hohe Lebensdauer aufweist. Ein geeignetes Material ist beispielweise Federstahl. Bevorzugt weisen die Materialien zusätzliche Eigenschaften wie Korrosionsbeständigkeit und/oder eine hohe Temperaturbeständigkeit auf.

Gemäß einer bevorzugten Weiterbildung der Erfindung ist vorgesehen, dass im entspannten Zustand der Schraubenfedern oder im unbetätigten Zustand des Druckkolbens zumindest eine der Schraubenfedern axial beabstandet zu der Stirnseite des Druckkolbens und/oder zu dem Axialanschlag angeordnet ist. Der Vorteil hierbei ist, dass die Schraubenfedern bei Betätigung des Druckkolbens nacheinander komprimiert werden und somit die Federkennlinie deutlich beeinflussen. Insbesondere ist dabei die resultierende Federhärte abhängig von den axialen Längen und den Federkonstanten der Schraubenfedern. Die Federkonstanten können konstant und/oder variabel sein. Wird beispielsweise eine einzige Schraubenfeder, die eine konstante Federkonstante aufweist, durch den Druckkolben ausgelenkt, so verhält sich die Druckkraft, mit der der Druckkolben auf die Schraubenfeder drückt, proportional zu der Auslenkung. Wird anschließend eine zweite Schraubenfeder, die ebenfalls eine konstante Federkonstante aufweist, ausgelenkt, so überlagern sich die jeweiligen Federkonstanten ab dem Zeitpunkt, an dem die erste und die zweite Schraubenfeder gemeinsam ausgelenkt werden. Der Verlauf zwischen Druckkraft und Auslenkung weicht von dem proportionalen Verlauf der nur einen ausgelenkten Schraubenfeder ab. Eine Kombination aus Schraubenfedern und Tellerfedern ermöglicht es somit, beliebige Federhärten zu erzeugen beziehungsweise Federkennlinien, beispielsweise progressive Federkennlinien, zu erhalten. Besonders bevorzugt ist vorgesehen, dass die Schraubenfedern koaxial zueinander angeordnet sind. Der Vorteil dabei ist, dass die Anordnung der Schraubenfedern in dem Gehäuse der Pedalkraftsimulatoreinrichtung besonders platzsparend ist. Die Durchmesser der Schraubenfedern sind dazu bevorzugt derart gewählt, dass jeweils benachbarte Schraubenfedern frei und mit einem vorgebbaren radialen Abstand zueinander angeordnet sind. Alternativ sind die Durchmesser der Schraubenfedern derart gewählt, dass sich der Außendurchmesser einer koaxial innen angeordneten Schraubenfeder und der Innendurchmesser einer koaxial außen angeordneten Schraubenfeder zumindest bereichsweise in axialer Richtung überlappen. Dies gewährleistet beispielsweise, dass schon bei einer geringen Auslenkung einer inneren, längeren Schraubenfeder eine äußere, kürzere Schraubenfeder gleichzeitig ausgelenkt wird, noch ehe die äußere Schraubenfeder selbst durch den Druckkolben mit einer Druckkraft beaufschlagt wird.

Gemäß einer bevorzugten Weiterbildung der Erfindung ist vorgesehen, dass jeweils koaxial zueinander angeordnete Schraubenfedern entgegengesetzt gewunden sind.

Vorzugsweise ist vorgesehen, dass die Stirnseite des Druckkolbens zumindest eine axial vorstehende, insbesondere ringförmige Anschlagstufe aufweist, die der axial beabstandet angeordneten Schraubenfeder zugeordnet ist. Hierdurch ergibt sich der Vorteil, dass die Auslenkung des Druckkolbens reduziert wird, ab welcher dieser zumindest zwei Schraubenfedern unterschiedlicher Länge mit einer Druckkraft beaufschlagt. Somit ist es möglich, dass bereits aus einer geringen Auslenkung des Druckkolbens eine große Federhärte resultiert. Auch ist es möglich, jeweils gleich lange Schraubenfedern, aber ungleich lange Anschlagstufen vorzusehen, so dass hierbei ein Nacheinander-Betätigen der einzelnen Schraubenfedern möglich ist. Die axiale Länge der Anschlagstufe entspricht zumindest im Wesentlichen der Beabstandung der Stirnseite des Druckkobens zu der jeweiligen, axial beabstandeten Schraubenfeder. Alternativ ist es möglich, die Anschlagstufe(n) auf dem Axialanschlag anzuordnen.

Gemäß einer bevorzugten Weiterbildung der Erfindung ist ein die Bewegung des Druckkolbens in Richtung des Axialanschlags begrenzender Anschlag vorgesehen. Der Vorteil hierbei ist, dass die Schraubenfedern und die Tellerfedern in Abhängigkeit einer Position des Anschlags nur begrenzt komprimierbar sind und damit ein maximaler Federweg einstellbar ist. Dadurch wird beispielsweise eine vollständige Komprimierung der Schraubenfedern und/oder der zumindest einen Tellerfeder vermieden. Der Anschlag ist bevorzugt als Anschlagring entlang einer Gehäuseinnenwand des Gehäuses der Pedalkraftsimulatoreinrichtung angeordnet, so dass der Druckkolben, insbesondere dessen Außendurchmesser, nach einer den Anschlagring erreichenden Auslenkung den Anschlagring berührt. Zusätzlich ist der Anschlag bevorzugt in axialer Richtung verlagerbar gelagert. Dies ist beispielsweise durch eine Verschraubung des Anschlags mit dem Gehäuse möglich, wobei zumindest zwei Schraublöcher in axialer Richtung beabstandet an der Gehäusewand des Gehäuses angeordnet sind, um den Anschlagring auf verschiedenen Positionen innerhalb des Gehäuses anzuordnen. Der Anschlag ist alternativ einstückig mit der Gehäuseinnenwand ausgebildet oder beispielsweise an dieser stoffschlüssig, insbesondere durch ein Verlöten, Verschweißen oder Verkleben befestigt.

Besonders bevorzugt ist vorgesehen, dass der Druckkolben als Anschlag einen sich zentrisch von dessen Stirnseite in axialer Richtung erstreckenden Stab aufweist, welcher eine Bewegung des Druckkolbens in axialer Richtung begrenzt. Der Vorteil hierbei ist, dass der Stab innerhalb des Gehäuses aufgrund dessen zentrischer Anordnung wenig Bauraum beansprucht. Vorzugsweise erstreckt sich der Stab koaxial durch die Schraubenfeder, so dass diese an dem Stab geführt wird. Dies gewährleistet eine höhere Stabilität der Schraubenfederanordnung. Der Durchmesser des Stabes ist bevorzugt derart gewählt, dass zwischen dem Stab und dem Innendurchmesser der geführten Schraubenfeder ein radialer Abstand besteht, so dass eine mechanische Reibung zwischen dem Stab und der Schraubenfeder minimiert wird. Zusätzlich oder alternativ weist die Tellerfeder eine Ausnehmung zur Aufnahme zumindest eines Teils des Stabs auf, so dass dieser den Axialanschlag des Gehäuses berühren kann. Der Durchmesser der Ausnehmung entspricht bevorzugt zumindest im Wesentlichen dem Durchmesser des Stabs.

Das erfindungsgemäße Bremssystem für ein Fahrzeug, insbesondere Kraftfahrzeug, mit den Merkmalen des Anspruchs 10 zeichnet sich durch eine Pedalkraftsimulatoreinrichtung aus. Es ergeben sich hierdurch die bereits genannten Vorteile. Weitere Vorteile und bevorzugte Merkmale ergeben sich aus dem zuvor Beschriebenen sowie aus den Ansprüchen.

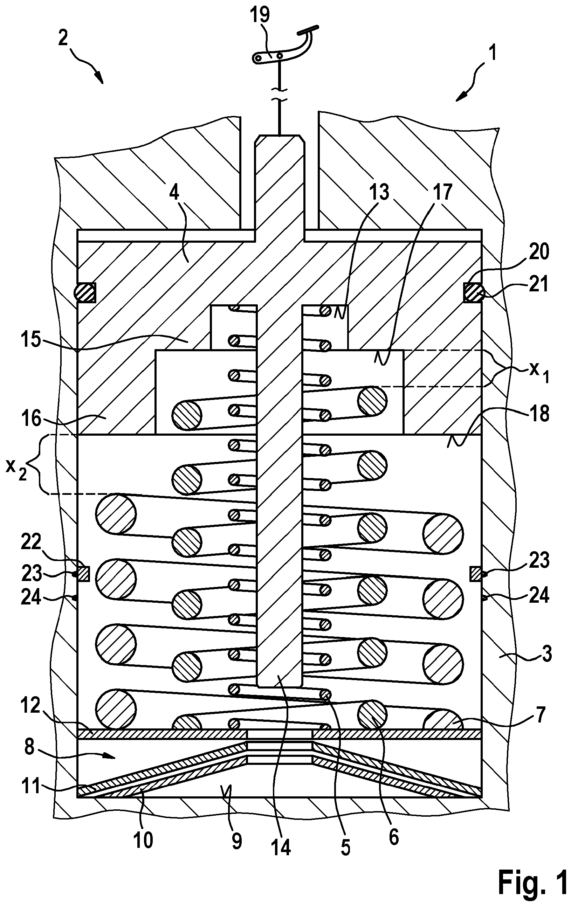

Im Folgenden soll die Erfindung anhand der Zeichnung näher erläutert werden. Dazu zeigt die einzige

Figur eine Pedalkraftsimulatoreinrichtung gemäß einem Ausführungsbeispiel in einer vereinfachten Seitenansicht.

Die einzige Figur zeigt eine Pedalkraftsimulatoreinrichtung 1 eines hier nicht dargestellten Fahrzeugs 2, mit einem Gehäuse 3, welches einen betätigbaren, axial verschiebbaren Druckkolben 4, eine erste Schraubenfeder 5, eine zweite Schraubenfeder 6, eine dritte Schraubenfeder 7 und eine Tellerfederanordnung 8 aufweist. Die Tellerfederanordnung 8 ist zwischen den Schraubenfedern 5, 6, 7 und einem auf dem Boden des Gehäuses 2 angeordneten Axialanschlag 9 zwischengeschaltet.

Die Tellerfederanordnung 8 weist eine erste Tellerfeder 10 und eine zweite Tellerfeder 11 auf, wobei die zweite Tellerfeder 11 parallel auf der ersten Tellerfeder 10 aufliegt. Auf der zweiten Tellerfeder 11 ist eine insbesondere metallische und in axialer Richtung verlagerbare Auflagescheibe 12 angeordnet. Diese bietet einerseits den Schraubenfedern 5, 6, 7 eine Stützfläche, anderseits gewährleistet sie, dass eine durch den Druckkolben 4 auf die Schraubenfedern 5, 6, 7 ausgeübte Druckkraft gleichmäßig auf die Tellerfederanordnung 8 übertragen wird.

Die Schraubenfedern 5, 6, 7 sind koaxial zueinander angeordnet und weisen jeweils unterschiedliche Längen, Durchmesser und gemäß dem Ausführungsbeispiel unterschiedliche, konstante Federkonstanten auf, wobei alternativ zumindest eine der Schraubenfedern 5, 6, 7 eine variable Federkonstante aufweisen kann. Die längste Schraubenfeder 5 ist zwischen einer Stirnseite 13 des Druckkolbens 4 und der Auflagescheibe 12 vorgespannt, während die Schraubenfedern 6, 7 axial beabstandet zu der Stirnseite 13 des Druckkolbens 4 angeordnet sind. Um ein Verwickeln bei einer Kompression beziehungsweise Dekompression der Schraubenfedern 5, 6, 7 zu vermeiden, ist die Schraubenfeder 6 entgegengesetzt zu der Schraubenfeder 5 und die Schraubenfeder 7 entgegengesetzt zu der Schraubenfeder 6 gewunden.

Die Stirnseite 13 des Druckkolbens 4 weist eine erste Anschlagstufe 15 mit einer Stirnseite 17 und eine zweite Anschlagstufe 16 mit einer Stirnseite 18 auf. Dabei ist die insbesondere ringförmige Anschlagstufe 15 der ihr axial beabstandeten Schraubenfeder 6 und die insbesondere ringförmige Anschlagstufe 16 der ihr axial beabstandeten Schraubenfeder 7 zugeordnet.

Die axiale Länge der Anschlagstufe 15 ist bevorzugt derart gewählt, dass die Stirnseite 17 der Anschlagstufe 15 und die ihr zugeordnete Schraubenfeder 6 einen vorgebbaren Abstand zueinander aufweisen, wobei der Abstand der Stirnseite 17 zu der Schraubenfeder 6 mit x₁ bezeichnet ist. Ebenso ist die axiale Länge der Anschlagstufe 16 bevorzugt derart gewählt, dass die Stirnseite 18 der Anschlagstufe 16 und die ihr zugeordnete Schraubenfeder 7 einen vorgebbaren Abstand zueinander aufweisen, wobei der Abstand der Stirnseite 18 zu der Schraubenfeder 7 mit x₂ bezeichnet ist, wobei der Abstand x₂ vorzugsweise größer ist als der Abstand x₁. Die Anschlagstufen 15, 16 gewährleisten, dass die axiale Auslenkung des Druckkolbens 4 reduziert wird, ab welcher der Druckkolben 4 die drei Schraubenfedern 5, 6, 7 gleichzeitig mit einer Druckkraft beaufschlagt. Dadurch ist es möglich, dass bereits aus einer geringen Auslenkung des Druckkolbens 4 eine große Federhärte resultiert.

Der Druckkolben 4 weist einen Stab 14 auf, welcher sich zentrisch von der Stirnseite 13 des Druckkolbens 4 in Richtung des Axialanschlags 9 durch die Schraubenfeder 5 erstreckt und eine Bewegung des Druckkolbens 4 in axialer Richtung begrenzt. Damit der Stab 14 mit dem Axialanschlag 9 des Gehäuses 3 zusammenwirken kann, weist die Tellerfederanordnung 8, insbesondere die Tellerfedern 10, 11 und die Auflagescheibe 12, jeweils eine zentrische Ausnehmung beziehungsweise einen Innendurchmesser auf, welche zumindest im Wesentlichen dem Durchmesser des Stabes 14 entspricht.

Bei einer Betätigung eines Bremspedals 19 des Fahrzeugs 2 mit einer Kraft wird der Druckkolben 4 ausgelenkt und beaufschlagt die Schraubenfeder 5 mit einer Druckkraft, wodurch diese komprimiert wird. Je größer die Kraft ist, mit der das Bremspedal 19 betätigt wird, desto größer wird die Druckkraft, die mittels des Druckkolbens 4 auf die Schraubenfeder 5 wirkt. Weil die Schraubenfeder 5 eine konstante Federkonstante aufweist, ist deren Auslenkung zunächst proportional zu der Druckkraft.

Sobald die Auslenkung des Druckkolbens 4 dem Abstand x₁ überwindet, so werden die erste Schraubenfeder 5 und die zweite Schraubenfeder 6 gemeinsam komprimiert. Die Federkonstanten der Schraubenfedern 5, 6 überlagern sich derart, dass eine resultierende Federhärte zunimmt, so dass eine weitere Auslenkung der Schraubenfedern nur mit einer Druckkraft möglich ist, die größer ist als die bislang ausgeübte Druckkraft auf die nur eine Schraubenfeder 5.

Überwindet der Druckkolben 4 durch die Auslenkung anschließend auch den Abstand x₂, so werden die erste Schraubenfeder 5, die zweite Schraubenfeder 6 und die dritte Schraubenfeder 7 gemeinsam komprimiert. Die resultierende Federhärte nimmt nochmals zu.

Bereits bei Komprimierung der ersten Schraubenfeder 5 wirkt die durch den Druckkolben 4 ausgeübte Druckkraft auch auf die Tellerfederanordnung 8. Bevorzugt sind die Tellerfedern 10, 11 jedoch derart vorgespannt, dass erst dann, wenn die Druckkraft so groß ist, dass alle drei Schraubenfedern 5, 6, 7 komprimiert werden, die Tellerfedern 10, 11 ausgelenkt werden. Eine weitere, minimale Auslenkung des Druckkolbens 4 erfordert nunmehr eine maximale Druckkraft des Druckkolbens 4 auf die Schraubenfedern 5, 6, 7 und die Tellerfederanordnung 8. Dies bewirkt, dass erst nahe bei einem Endanschlag des Bremspedals 19 eine maximale Rückstellkraft auf das Bremspedal 19 zurück wirkt und somit ein Bremspedalkraftgefühl simuliert wird, wie es dem Bremspedalkraftgefühl eines Fahrzeugs mit konventionellem, hydraulischem Bremssystem entspricht.

Alternativ zu dem Stab 14 ist es möglich, einen die Bewegung des Druckkolbens 4 begrenzenden Anschlag 22 vorzusehen, welcher an der Gehäuseinnenwand des Gehäuses 3 in Form eines Anschlagrings angeordnet ist. Dabei ist der Anschlag 22 mittels einer Verschraubungsvorrichtung 23 an dem Gehäuse 3 befestigt und bevorzugt in axialer Richtung verlagerbar angeordnet, beispielsweise durch eine Befestigung mittels einer weiteren Verschraubungsvorrichtung 24.

Alternativ ist es möglich, den Druckkolben 4 ohne Stufen 15, 16 auszubilden. Dadurch vergrößern sich die Abstände x₁ und x₂, so dass eine gemeinsam Komprimierung der Schraubenfedern 5, 6, 7 erst nach einer größeren Auslenkung des Druckkolbens 4 einsetzt. Auch ist es möglich, die Schraubenfedern 5, 6, 7 gleich lang auszubilden, wobei bei einer Auslenkung des Druckkolbens 4 die Schraubenfedern 5, 6, 7 gemeinsam komprimiert werden.

Zusätzlich kann spiegelbildlich zu der Tellerfeder 11 zumindest eine dritte, hier nicht dargestellte Tellerfeder auf der Tellerfeder 11 angeordnet werden. Dadurch ist es möglich, eine resultierende Federhärte beziehungsweise eine Federkennlinie anzupassen. Sowohl die zumindest eine dritte Tellerfeder als auch die Tellerfedern 10, 11 sind bevorzugt aus Metall, einer metallischen Legierung und/oder Kunststoff gefertigt.

Alternativ oder zusätzlich ist es möglich, eine hier nicht dargestellte, weitere Tellerfederanordnung mit Auflagescheibe zwischen den Schraubenfedern 5, 6, 7 und dem Druckkolben 4 anzuordnen. Dazu ist die Stirnseite 13 des Druckkolbens bevorzugt ohne Anschlagstufen 15, 16 ausgebildet, um ein besseres Aufliegen der weiteren Tellerfederanordnung auf dem Druckkolben 4 zu gewährleisten. Die Schraubenfeder 5 ist dabei bevorzugt zwischen der weiteren Tellerfederanordnung und dem Axialanschlag 9 oder zwischen der weiteren Tellerfederanordnung und der Tellerfederanordnung 8 vorgespannt, so dass die weitere Tellerfederanordnung durch die Schraubenfeder 5 kraftschlüssig an den Druckkolben 4 angepresst wird. Auch eine formschlüssige oder stoffschlüssige Befestigung der weiteren Tellerfederanordnung an dem Druckkolben 4 ist möglich.

Bevorzugt weist der Druckkolben 4 zwischen einer Gehäuseinnenwand des Gehäuses 3 und einer Mantelaußenfläche des Druckkolbens 4 eine radiale Ausnehmung 20 auf, in welcher ein Dichtring 21 angeordnet ist. Der Dichtring 21 ist bevorzugt zwischen der Gehäuseinnenwand des Gehäuses 3 und der Wandseite der Ausnehmung 20, welche der Gehäuseinnenwand gegenüberliegt, elastisch vorgespannt.

Die beschriebenen Ausführungsformen sind beliebig miteinander kombinierbar und nicht auf die genannten Ausführungsbeispiele beschränkt. Durch die beschriebene Pedalkraftsimulatoreinrichtung 1 ist es möglich, beliebige Federkennlinien beziehungsweise Federhärten zu realisieren, um ein dem hydraulischen Bremsen entsprechendes Bremspedalkraftgefühl zu erzeugen. Insbesondere in einem Endanschlagbereich, wenn das Bremspedal 19 und damit der Druckkolben 4 nahezu vollständig ausgelenkt sind, können hohe Endkräfte beziehungsweise Rückstellkräfte an dem Bremspedal 19 erzeugt werden und das Bremspedalkraftgefühl verbessern. Die Pedalkraftsimulatoreinrichtung 1 ist beispielsweise bei allen elektro-hydraulischen Bremssystemen einsetzbar, die teilweise oder vollständig mit einem "Brake-by-Wire" Bremssystem betrieben werden können.

## Patentansprüche

1. Pedalkraftsimulatoreinrichtung (1), mit einem Gehäuse (3), in welchem ein betätigbarer Druckkolben (4) axial verschiebbar gelagert ist und mit zumindest zwei Schraubenfedern (5,6,7), die zwischen einer Stirnseite (13) des Druckkolbens (4) und einem Axialanschlag (9) des Gehäuses (3) angeordnet sind wobei zwischen den Schraubenfedern (5,6,7) und dem Axialanschlag (9) und/oder zwischen den Schraubenfedern (5,6,7) und dem Druckkolben (4) jeweils zumindest eine Tellerfeder (10,11) zwischengeschaltet ist,
**dadurch gekennzeichnet, dass** die Schraubenfedern (5,6,7) parallel zueinander angeordnet sind und entgegengesetzt gewunden sind.

2. Pedalkraftsimulatoreinrichtung nach Anspruch 1, **dadurch gekennzeichnet, dass** auf der zumindest einen Tellerfeder (10,11) zumindest eine weitere Tellerfeder (10,11) aufliegt, so dass die Tellerfedern (10,11) eine gestapelte Tellerfederanordnung (8) bilden, wobei die Tellerfeder (10,11) und die zumindest eine weitere Tellerfeder (10,11) parallel und/oder spiegelbildlich zueinander ausgerichtet sind.

3. Pedalkraftsimulatoreinrichtung nach einem der vorhergehenden Ansprüche,
**dadurch gekennzeichnet, dass** die Tellerfeder (10,11) Metall, eine metallische Legierung und/oder Kunststoff aufweist.

4. Pedalkraftsimulatoreinrichtung nach einem der vorhergehenden Ansprüche,
**dadurch gekennzeichnet, dass** im entspannten Zustand der Schraubenfedern (5,6,7) oder im unbetätigten Zustand des Druckkolbens (4) zumindest eine der Schraubenfedern (5,6,7) axial beabstandet zu der Stirnseite (13) des Druckkolbens (4) und/oder zu dem Axialanschlag (9) angeordnet ist.

5. Pedalkraftsimulatoreinrichtung nach einem der vorhergehenden Ansprüche,
**dadurch gekennzeichnet, dass** die Schraubenfedern (5,6,7) koaxial zueinander angeordnet sind.

6. Pedalkraftsimulatoreinrichtung nach einem der vorhergehenden Ansprüche,
**dadurch gekennzeichnet, dass** die Stirnseite (13) des Druckkolbens (4) zumindest eine axial vorstehende Anschlagstufe (15,16) aufweist, die der axial beabstandet angeordneten Schraubenfeder (6,7) zugeordnet ist.

7. Pedalkraftsimulatoreinrichtung nach einem der vorhergehenden Ansprüche, **gekennzeichnet durch** ein die Bewegung des Druckkolbens (4) in Richtung des Axialanschlags (9) begrenzenden Anschlag (22).

8. Pedalkraftsimulatoreinrichtung nach einem der vorhergehenden Ansprüche, **dadurch gekennzeichnet, dass** der Druckkolben (4) als Anschlag einen sich zentrisch von dessen Stirnseite (13) in axialer Richtung erstreckenden Stab (14) aufweist, welcher eine Bewegung des Druckkolbens (4) in axialer Richtung begrenzt.

9. Bremssystem für ein Fahrzeug, insbesondere Kraftfahrzeug,
**gekennzeichnet durch** eine Pedalkraftsimulatoreinrichtung (1) nach einem der Ansprüche 1 bis 8.

## Claims

1. Pedal force simulator device (1), having a housing (3), in which an actuatable pressure piston (4) is axially displaceably mounted, and having at least two helical springs (5, 6, 7), which are arranged between an end face (13) of the pressure piston (4) and an axial stop (9) of the housing (3), wherein at least one disc spring (10, 11) is interposed in each case between the helical springs (5, 6, 7) and the axial stop (9) and/or between the helical springs (5, 6, 7) and the pressure piston (4),
**characterized in that** the helical springs (5, 6, 7) are arranged parallel to one another and are oppositely wound.

2. Pedal force simulator device according to Claim 1, **characterized in that** the at least one disc spring (10, 11) has at least one further disc spring (10, 11) lying thereon, with the result that the disc springs (10, 11) form a slacked disc spring arrangement (8), wherein the disc spring (10, 11) and the at least one further disc spring (10, 11) are oriented parallel and/or in mirrorimage fashion to one another.

3. Pedal force simulator device according to either of the preceding claims, **characterized in that** the disc spring (10, 11) contains metal, a metallic alloy and/or plastic.

4. Pedal force simulator device according to one of the preceding claims, **characterized in that**, in the relaxed states of the helical springs (5, 6, 7), or in the unactuated state of the pressure piston (4), at least one of the helical springs (5, 6, 7) is arranged axially spaced apart from the end face (13) of the pressure piston (4) and/or from the axial stop (9).

5. Pedal force simulator device according to one of the preceding claims, **characterized in that** the helical springs (5, 6, 7) are arranged coaxially to one another.

6. Pedal force simulator device according to one of the preceding claims, **characterized in that** the end face (13) of the pressure piston (4) has at least one axially projecting stop step (15, 16) which is assigned to the helical springs (6, 7) arranged axially spaced apart.

7. Pedal force simulator device according to one of the preceding claims, **characterized by** a stop (22) which limits the movement of the pressure piston (4) in the direction of the axial stop (9).

8. Pedal force simulator device according to one of the preceding claims, **characterized in that** the pressure piston (4) has as stop a bar (14) which extends centrally from its end face (13) in the axial direction and which limits a movement of the pressure piston (4) in the axial direction.

9. Brake system for a vehicle, in particular a motor vehicle, **characterized by** a pedal force simulator device (1) according to one of Claims 1 to 8.

## Revendications

1. Dispositif de simulation de force de pédale (1), comprenant un boîtier (3) dans lequel un piston de pression actionnable (4) est monté de manière à pouvoir coulisser axialement et au moins deux ressorts hélicoïdaux (5, 6, 7) qui sont disposés entre une face frontale (13) du piston de pression (4) et une butée axiale (9) du boîtier (3) et au moins un ressort à disques (10, 11) étant interposé entre chacun des ressorts hélicoïdaux (5, 6, 7) et la butée axiale (9) et/ou entre chacun des ressorts hélicoïdaux (5, 6, 7) et le piston de pression (4), **caractérisé en ce que** les ressorts hélicoïdaux (5, 6, 7) sont disposés parallèlement les uns aux autre et sont enroulés dans des sens opposés.

2. Dispositif de simulation de force de pédale selon la revendication 1, **caractérisé en ce qu'**au moins un autre ressort à disques (10, 11) vient en appui sur l'au moins un ressort à disques (10, 11) de sorte que les ressorts à disques (10, 11) forment un ensemble de ressorts à disques empilés (8), le ressort à disques (10, 11) et l'au moins un autre ressort à disques (10, 11) étant orientés parallèlement et/ou en miroir l'un par rapport à l'autre.

3. Dispositif de simulation de force de pédale selon l'une des revendications précédentes,
**caractérisé en ce que** le ressort à disques (10, 11) comprend un métal, un alliage métallique et/ou une matière synthétique.

4. Dispositif de simulation de force de pédale selon l'une des revendications précédentes,
**caractérisé en ce que**, lorsque les ressorts hélicoïdaux (5, 6, 7) sont détendus ou lorsque le piston de pression (4) n'est pas actionné, au moins un des ressorts hélicoïdaux (5, 6, 7) est disposé en étant espacé axialement de la face frontale (13) du piston de pression (4) et/ou de la butée axiale (9).

5. Dispositif de simulation de force de pédale selon l'une des revendications précédentes,
**caractérisé en ce que** les ressorts hélicoïdaux (5, 6, 7) sont disposés coaxialement les uns aux autres.

6. Dispositif de simulation de force de pédale selon l'une des revendications précédentes,
**caractérisé en ce que** la face frontale (13) du piston de pression (4) comporte au moins un palier de butée (15, 16) saillant axialement qui est associé au ressort hélicoïdal (6, 7) disposé en étant espacé axialement.

7. Dispositif de simulation de force de pédale selon l'une des revendications précédentes,
**caractérisé par** une butée (22) limitant le mouvement du piston de pression (4) en direction de la butée axiale (9) .

8. Dispositif de simulation de force de pédale selon l'une des revendications précédentes,
**caractérisé en ce que** le piston de pression (4) comporte comme butée une tige (14) qui s'étend centralement depuis sa face frontale (13) dans la direction axiale et qui limite un mouvement du piston de pression (4) dans la direction axiale.

9. Système de freinage d'un véhicule, notamment d'un véhicule automobile,
**caractérisé par** un dispositif de simulation de force de pédale (1) selon l'une des revendications 1 à 8.
